# EUROPÄISCHE PATENTSCHRIFT

(11) **EP 1 779 171 B1**
(45) Veröffentlichungstag und Bekanntmachung des Hinweises auf die Patenterteilung: **27.01.2021**
(21) Anmeldenummer: 05787914.0
(22) Anmeldetag: 11.08.2005
(51) Int. Cl.: G02B 23/10, G02B 23/18

(54) **VORRICHTUNG ZUM VERGRÖSSERNDEN BETRACHTEN EINES OBJEKTS**
DEVICE FOR THE MAGNIFIED VIEWING OF AN OBJECT
DISPOSITIF POUR OBSERVATION GROSSISSANTE D'OBJETS

(30) Priorität: 16.08.2004 CH 134904
(43) Veröffentlichungstag der Anmeldung: 02.05.2007
(73) Patentinhaber: Safran Vectronix AG, 9435 Heerbrugg (CH)
(72) Erfinder: DRODOFSKY, Ulrich, CH-9442 Berneck (CH); GSTÖHL, Gerd, Wolfgang, A-6850 Dornbirn (AT); ZADRAVEC, Dusan, CH-9445 Rebstein (CH)
(74) Vertreter: Kaminski Harmann
(86) Internationale Anmeldenummer: PCT/EP2005/008708
(87) Internationale Veröffentlichungsnummer: WO 2006/018212

(56) Entgegenhaltungen:
- DE-A1- 3 704 848
- DE-A1- 10 021 063
- FR-A1- 2 704 072
- GB-A- 2 006 463
- US-A- 5 349 179
- US-A- 5 579 165
- US-A- 5 581 399
- US-A1- 2002 034 004
- PATENT ABSTRACTS OF JAPAN Bd. 2000, Nr. 06, 22. September 2000 (2000-09-22) & JP 2000 089123 A (OLYMPUS OPTICAL CO LTD), 31. März 2000 (2000-03-31)

## Beschreibung

Die Erfindung bezieht sich auf eine Vorrichtung nach dem Oberbegriff des Anspruchs 1.

Derartige optisch vergrössernde Vorrichtungen, beispielsweise herkömmliche Ferngläser oder professionelle Mikroskope, weisen für jedes Auge eines Benutzers jeweils ein Okular auf, um ein Betrachten eines Objekts über einen längeren Zeitraum auch ohne ein vorschnelles Ermüden zu ermöglichen. Im Gegensatz zu einem monokularen Zielfernrohr kann damit beispielsweise ein weit entferntes Zielobjekt gegebenenfalls auch über Stunden auf ergonomische Weise betrachtet werden. Eine solche optisch vergrössernde Vorrichtung kann zudem mit einer Anzeige versehen sein, über die dem Benutzer, gegebenenfalls auch während dem vergrössernden Betrachten des Objekts, ein Bild zur Verfügung gestellt wird. Diese Bild kann beispielsweise ein Wärmebild des Objekts, ein Nachtsichtbild oder ein Bild mit einem dargestellten Messwert sein. Entsprechend ist ein lang andauerndes Betrachten der Anzeige ohne vorschnelles Ermüden auch nur über zwei Okulare möglich.

In an sich bekannter Weise müssen die beiden Okulare derartiger Vorrichtungen gegeneinander bewegbar ausgebildet sein, um den Abstand der Okulare dem individuellen Augenabstand des Betrachters anpassen zu können. Über das linksäugige und rechtsäugige Okular werden ein linksäugiges bzw. rechtsäugiges Bündel optischen Strahlen in das linksäugige bzw. rechtsäugige Auge des Benutzers projiziert. In an sich bekannter Weise müssen diese Bündel einander innerhalb enger optischer Toleranzen entsprechen, um beim lang andauernden Betrachten keine Kopfschmerzen beim Betrachter hervorzurufen. Ist die Eintrittsfläche für vom Objekt ausgehende Objektstrahlen entsprechend gross dimensioniert und werden durch die Vorrichtung verursachte Transmissionsverluste gering gehalten, so weisen die projizierten Sehfeldstrahlen eine Intensität auf, die auch bei weniger optimalen Lichtverhältnissen ein langandauerndes Betrachten eines entfernten Objekts ermöglicht.

Als herkömmliche Ferngläser ausgebildete, handhaltbare Vorrichtungen zum Betrachten eines fernen Objekts weisen ein linksäugiges und ein rechtsäugiges Direktsicht-System mit jeweils einem Objektiv, einem Bildumkehrsystem und einem Okular auf. In der Regel sind beide Direktsicht-Systeme optisch identisch ausgelegt und über eine Knickmechanik miteinander verbunden. Dies ermöglicht auf einfache Weise die geforderte Bewegbarkeit der Okulare bei gleichzeitiger Einhaltung der engen Toleranzen in Bezug auf die Parallelität der optischen Achsen beider Direktsicht-Systeme und die optische Abbildung beider getrennter Strahlenbündel. Auf die Weise können leichte und robuste Vorrichtungen zum komfortablen Betrachten ferner Objekte realisiert werden, die vom Benutzer selbst von Hand gehalten und zum Einsatzort getragen werden können. Mit qualitativ hochwertigen Direktsicht-Optiken versehen, können sie auch bei weniger optimalen Lichtverhältnissen, beispielsweise in der Dämmerung, eingesetzt werden.

Da beim Betrachten eines fernen Objekts mit einem Fernglas oft auch Informationen über dessen Relativposition zum Benutzer von Interesse sind, sind bei so genannten Messferngläsern unterschiedliche Messsensoren, beispielsweise Distanzmesser und/oder Magnetkompasse, integriert. Aus der DE 37 04 848 A1 ist ein derartiges Messfernglas bekannt, bei dem auf einer Anzeige dargestellte Messwerte über eine physikalische Strahlenteilerfläche in das linksäugige Direktsicht-System eingekoppelt und während dem Betrachten des fernen Objekts dem Benutzer zur Verfügung gestellt werden. An der physikalischen Strahlenteilerfläche gehen bei einem derartigen Einkoppeln unweigerlich vom Objektiv eingesammelte Strahlen zumindest aus dem Wellenlängenbereich der eingekoppelten Strahlen verloren. Dies ist insbesondere bei polychromatischen Anzeigen nachteilig. Zudem geht an derselben physikalischen Strahlenteilerfläche auch zwangsläufig ein Teil der von der Anzeige ausgehenden Strahlen verloren. Da der Grossteil des Energiebedarfs eines derartigen Messfernglases heute auf die Anzeige zurückzuführen ist, verschärfen Einkoppelverluste von Anzeigestrahlen zusätzlich die bei derartigen tragbaren Geräten in der Regel vorhandene Problematik der Energieversorgung.

Aus der US 5,579,165 ist ein computerisiertes Fernglas mit zwei getrennten Direktsicht-Systemen bekannt, das über eine digital ansteuerbaren Bildschirmanzeige mit einer Vielzahl von Pixeln verfügt. Über diese können nicht nur Messwerte, sondern auch aufgenommene oder computergenerierte Bilder in einen der beiden Strahlengänge des Fernglases eingespiegelt und gegebenenfalls einem Direktsicht-Bild überlagert werden. Soll einem Direktsicht-Bild eines Objekts ein aufgenommenes und angezeigtes Bild desselben Objekts überlagert werden, so muss die Präzision einer solchen Überlagerung hohen Anforderungen genügen, damit ein Benutzer keine störenden Mehrfachbilder wahrnimmt. Für ein langandauerndes Betrachten könnten prinzipiell zwei Bildschirmanzeigen vorgesehen werden. Dies hätte aber negative Auswirkungen auf den Energieverbrauch und die Herstellkosten des Geräts.

Aus der US 2002/0034004 A1 ist ein Fernglas mit zwei getrennten Direktsicht-Systemen bekannt, das eine gemeinsame Anzeige für beide getrennten Direktsicht-Systeme aufweist. Über optische Schalter und teildurchlässige Spiegel soll es auf diese Weise möglich sein, beiden Direktsicht-Bildern abwechselnd ein digitales Bild der Anzeige zu überlagern. Hierbei würden an den beiden offenbarten physikalischen Strahlenteilerflächen, die in den beiden getrennten Strahlengängen der Direktsicht-Systeme vorgesehen sind, insbesondere bei einer polychromatischen Anzeige, nennenswerte Teile der von einem Objekt und von der gemeinsamen Anzeige ausgehenden Strahlen verloren gehen.

Aus der US 6,204,961 ist ein Tag-Nachtsicht-Zielsystem bekannt, das ein Direktsicht-System, einen Entfernungsmesser und ein Indirektsicht-System mit einem Infrarot-Bildsensor und einer Anzeige auch zur Wiedergabe vom Infrarot-Bildsensor aufgenommener Bilder aufweist. Bei einem Einsatz bei Nacht werden dabei dem Benutzer vom Infrarot-Bildsensor aufgenommene Bilder über die Anzeige, einen teildurchlässigen Spiegel und ein einziges Okular zur Verfügung gestellt. Derartige Tag-Nachtsicht-Zielsysteme sind heute als monokulare Laserentfernungsmesser oder monokulare Zielfernrohre ausgebildet, die für ein lang andauerndes Beobachten wenig geeignet sind.

FR 2 704 072 A1 offenbart ein Handhaltbares, multifunktionales Beobachtungsgerät zum vergrössernden Betrachten eines fernen Objekts, von dem Objektstrahlen ausgehen, mit einer Direktsicht-Optik mit einem einzigen Objektiv (2) zum Einsammeln von Objektstrahlen, wenigstens einem Bildumkehrsystem (4), das mehrere Reflexionsflächen für eingesammelte Objektstrahlen aufweist, einem linksäugigen Okular (8) und einem rechtsäugigen Okular (6) zum Projizieren eines linksäugigen Bündels Sehfeldstrahlen bzw. eines rechtsäugigen Bündels Sehfeldstrahlen, wobei die beiden Okulare gegeneinander linear verschiebbar sind, einer Anzeige (17), von der Anzeigestrahlen ausgehen, wobei ein optisches Bauteil mit einer physikalischen Strahlenteilerfläche derart ausgebildet und angeordnet ist, dass an der Strahlenteilerfläche einerseits ein Bündel eingesammelter Objektstrahlen und ein Bündel Anzeigestrahlen einander überlagerbar und andererseits in das linksäugige und das rechtsäugige Bündel Sehfeldstrahlen aufteilbar sind. Aufgabe der Erfindung ist es, Mängel des Standes der Technik zu beheben. Eine Aufgabe der Erfindung ist es, eine vergrössernde Vorrichtung mit einer Anzeige bereitzustellen, mit welcher Vorrichtung die Anzeige und ein Objekt, gegebenenfalls gleichzeitig, lang andauernd vergrössernd betrachtet werden können.

Eine weitere Aufgabe ist es, eine handhaltbare Vorrichtung zum lang andauernden, vergrössernden Betrachten eines Objekts bereitzustellen, welche Vorrichtung sich als Gerätebasis für wenigstens einen, gegebenenfalls bilderzeugenden, Sensor eignet.

Diese Aufgaben werden durch eine Vorrichtung ^{.} mit den Merkmalen des Patentanspruchs 1 gelöst.

Weitere vorteilhafte Aus- bzw. Weiterbildungen der Erfindung sind in den abhängigen Patentansprüchen beschrieben.

Nachstehend werden anhand von Zeichnungen Ausführungen erfindungsgemässer Vorrichtungen zum vergrössernden Betrachten von Objekten rein beispielhaft näher erläutert. Es zeigen in schematischer Darstellung:
- Figur 1: optische Bauteile eines Ausführungsbeispiels einer erfindungsgemässen Vorrichtung zum Betrachten eines fernen Objekts in Draufsicht,
- Figur 2: optische Bauteile eines alternativen Ausführungsbeispiels einer Vorrichtung aus Figur 1 in einer Schrägansicht,
- Figur 3: optische Bauteile und eine Anzeige einer Vorrichtung zum Betrachten eines Objekts und der Anzeige in Draufsicht,
- Figur 4: Bauteile eines Ausführungsbeispiels einer erfindungsgemässen Vorrichtung zum Betrachten eines fernen Objekts und einer Anzeige in einer Schrägansicht und
- Figuren 5a und 5b: Bauteile eines alternativen Ausführungsbeispiels der Vorrichtung aus Figur 4 in Seitenansicht bzw. Draufsicht.

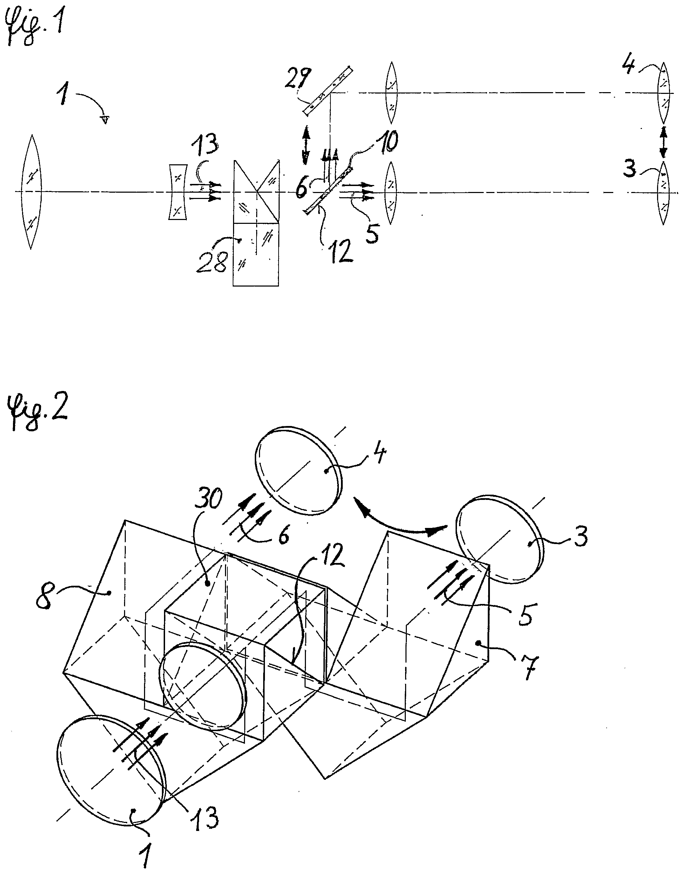

Figur 1 zeigt in Draufsicht optische Bauteile eines Ausführungsbeispiels einer Vorrichtung zum vergrössernden Betrachten eines fernen Objekts gemäss einer ersten Ausbildung der Erfindung. Vom in Figur 1 nicht dargestellten fernen Objekt gehen Objektstrahlen aus.

Dieses Ausführungsbeispiel weist ein einziges Objektiv 1, ein dem Objektiv 1 zugeordnetes, zentrales Bildumkehrsystem 28 eine Strahlenteilerplatte 10, eine Spiegelplatte 29, weitere Linsen, ein linksäugiges Okular 3 und ein rechtsäugiges Okular 4 auf.

Über das hier afokal ausgebildete Objektiv 1 werden Objektstrahlen eingesammelt und als kollimiertes Bündel eingesammelter Objektstrahlen 13 über das zentrale Bildumkehrsystem 28, in Richtung der Strahlenteilerplatte 10 gelenkt. Das Bildumkehrsystem 28 ist hier rein beispielhaft als Porro zweiter Art ausgebildet. Es könnte jedoch im Prinzip genauso gut als ein Porro erster Art, ein Schmid-Pechan, ein König-Abbe, ein Uppendahl oder ein anderes optisches System mit Reflexionsflächen zur vollständigen Bildumkehr ausgebildet sein. Die Strahlenteilerplatte 10 weist eine physikalische Strahlenteilerfläche 12 auf, auf der hier eine dielektrische Schicht aufgebracht ist. An der Strahlenteilerfläche 12 wird das Bündel eingesammelter Objektstrahlen 13 in ein linksäugiges Bündel 5 und in ein rechtsäugiges Bündel 6 Sehfeldstrahlen aufgeteilt. Über die dielektrische Schicht wird das Bündel eingesammelter Objektstrahlen 13 hier symmetrisch ohne nennenswerte Verluste von Strahlen in das linksäugige und das rechtsäugige Bündel 5 und 6 aufgeteilt. Das kollimierte, rechtsäugige Bündel 6 wird gegen die Spiegelplatte 29 und von dieser über eine der weiteren Linsen in Richtung des rechtsäugigen Okulars 4 gelenkt. Das rechtsäugige Bündel 6 Sehfeldstrahlen wird hier - im Gegensatz zum linksäugigen Bündel 5 - an zwei weiteren Reflexionsflächen gespiegelt. Über das linksäugige und das rechtsäugige Okular 3 und 4 wird dann das linksäugige bzw. rechtsäugige Bündel 5 bzw. 6 von Sehfeldstrahlen in das linke bzw. das rechte Auge eines in Figur 1 nicht dargestellten Benutzers der Vorrichtung projiziert.

Bei diesem Ausführungsbeispiel sind die Spiegelplatte 29, das rechtsäugige Okular 4 und die eine der weiteren Linsen fest miteinander verbunden und über eine nicht dargestellte Linearführung senkrecht zu den optischen Achsen der Okulare 3 und 4 verschiebbar verbunden. Damit kann der Abstand der Okulare 3 und 4 dem Augenabstand des jeweiligen Benutzers angepasst werden.

Die Eintrittsöffnung des Objektivs 1 weist hier beispielsweise einen Durchmesser von sechzig Millimetern auf. Im Wesentlichen aufgrund entsprechender Beschichtungen der optischen Bauteile - insbesondere des Strahlenteilers - zeichnet sich die Vorrichtung durch geringe Transmissionsverluste sichtbarer Strahlen aus. Damit können, beispielsweise zehnfach vergrössernd, sowohl bei Tag als auch in der Dämmerung auch entfernte Objekte auf rein optische Art und Weise - in so genannter Direktsicht - mit beiden Augen langandauernd und komfortabel betrachtet werden.

Als Teil eines multifunktionalen Beobachtungsgeräts kann eine Vorrichtung gemäss diesem Ausführungsbeispiel bei Tag und in der Dämmerung einerseits als Beobachtungseinrichtung und andererseits als Zieleinrichtung, beispielsweise für den Entfernungssensor oder eine Laser-basierte Zielbeleuchtung, genutzt werden. Beim Ausführungsbeispiel aus Figur 1 eignet sich insbesondere der linksäugige Strahlengang als Zieleinrichtung, da das Objektiv 1, das zentrale Bildumkehrsystem 28 und eine in Figur 1 nicht dargestellte Zielmarke im Prinzip über ein einziges Gehäuseteil fest miteinander verbunden werden können. Dadurch kann eine hohe Richtungsstabilität und Robustheit der Zieleinrichtung gewährleistet werden.

Figur 2 zeigt optische Bauteile eines alternativen Ausführungsbeispiels der erfindungsgemässen Vorrichtung zum vergrössernden Betrachten eines fernen Objekts aus Figur 1 in einer Schrägansicht.

Dieses Ausführungsbeispiel weist ebenfalls ein einziges - hier jedoch nicht afokal ausgebildetes - Objektiv 1, ein linksäugiges Okular 3 und ein rechtsäugiges Okular 4 auf, die im Gegensatz zu Figur 1 gegeneinander verschwenkbar verbunden sind. Anstelle des zentralen Bildumkehrsystems 28, der Strahlenteilerplatte 10 und des Spiegelplatte 29 der Vorrichtung aus Figur 1 ist hier ein linksäugiges Bildumkehrsystem 7 und ein rechtsäugiges Bildumkehrsystem 8 mit einem aufgesetzten Hilfsprisma 30 vorgesehen.

Die beiden Bildumkehrsysteme 7 und 8 sind ebenfalls als Porro zweiter Art ausgebildet und jeweils einem der beiden Okulare 3 und 4 zugeordnet. Das rechtsäugige Bildumkehrsystem 8 ist hier zwischen dem Objektiv 1 und dem linksäugigen Bildumkehrsystem 7 angeordnet. Die in Ausbreitungsrichtung des Bündels eingesammelter Objektstrahlen 13 erste von vier Reflexionsflächen des rechtsäugigen Bildumkehrsystems 8 ist hier als physikalische Strahlenteilerfläche 12 ausgebildet. An der ersten Reflexionsfläche wird das Bündel eingesammelter Objektstrahlen 13 in ein linksäugiges Bündel 5 und ein rechtsäugiges Bündel 6 Sehfeldstrahlen - hier ebenfalls symmetrisch - Teilen aufgeteilt. Vom rechtsäugigen Bildumkehrsystem 8 wird hier neben der vollständigen Bildumkehr zugleich die Funktion eines erfindungsgemässen, optischen Bauteils - das Aufteilen in das links- und rechtsäugige Bündel 5 und 6 Sehfeldstrahlen - ausgeübt. Das Hilfsprisma 30 ist auf der physikalischen Strahlenteilerfläche 12 angeordnet. Das linksäugige Bündel 5 breitet sich über das Hilfsprisma 30 in Richtung des linksäugigen Bildumkehrsystems 7 aus. Das links- und rechtsäugige Bündel 5 und 6 Sehfeldstrahlen wird hier an den vier Reflexionsflächen des jeweils zugeordneten Bildumkehrsystems 7 und 8 gespiegelt.

Das linksäugige Bildumkehrsystem 7 und das linksäugige Okular 3 sind hier fest miteinander verbunden und über ein in Figur 2 nicht dargestelltes Zylinderlager mit dem rechtsäugigen Umkehrsystem 8 und dem Objektiv 1 um dessen optische Achse schwenkbar verbunden. Damit kann der Abstand der Okulare 3 und 4 dem Augenabstand entsprechend angepasst werden.

Auch dieses alternative Ausführungsbeispiel kann mit Vorteil als Gerätebasis für ein handhaltbares, multifunktionales Beobachtungsgerät, beispielsweise zur militärischen Zielerfassung und Koordinatenbestimmung bei Tag und bei Nacht, verwendet werden. Eine zu diesem Zweck in dieses Ausführungsbeispiel zu integrierende Anzeige würde hier mit Vorteil oberhalb des Hilfsprismas 30 angeordnet werden. Mit beiden Augen könnte damit ein beispielsweise von einem bilderzeugenden Sensor bereitgestelltes Bild über Stunden betrachtet werden.

Für eine Zieleinrichtung würde sich bei diesem Ausführungsbeispiel insbesondere der rechtsäugige Strahlengang anbieten. Bei diesem könnte das Objektiv 1, das rechtsäugige Umkehrsystem 8 und eine in Figur 2 nicht dargestellte Zielmarke, gegebenenfalls über ein einziges Gehäuseteil, fest miteinander verbunden und lagestabil zueinander ausgerichtet werden könnten.

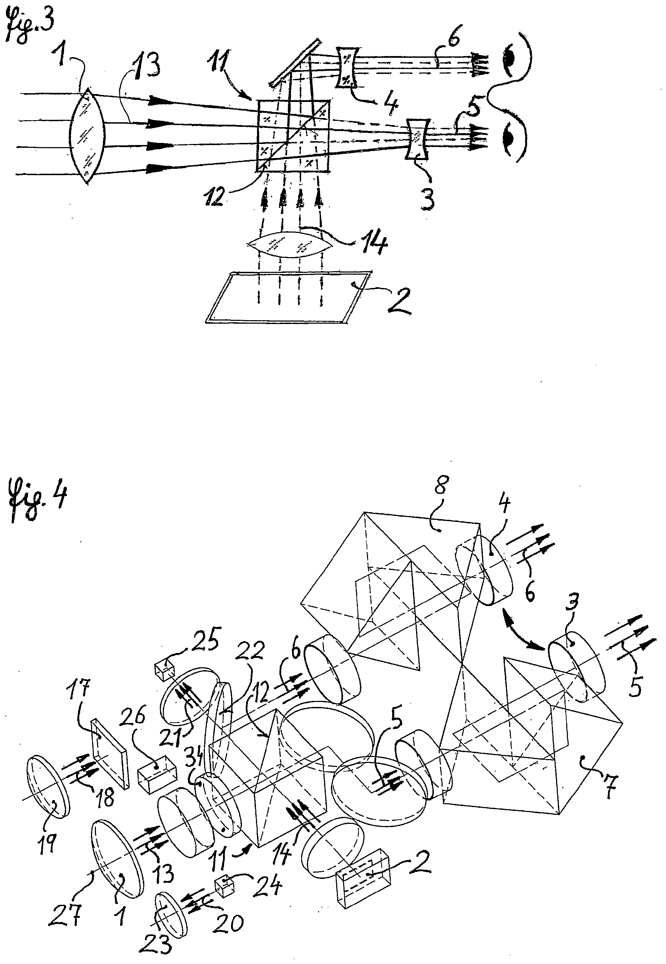

Figur 3 zeigt rein schematisch Bauteile einer Vorrichtung zum vergrössernden Betrachten eines Objekts und einer Anzeige.

Diese Vorrichtung weist als optische Bauteile ein Objektiv 1, einen Teilerwürfel 11, ein linksäugiges Okular 3, ein rechtsäugiges Okular 4 sowie als elektrooptisches Bauteil eine Anzeige 2 auf. Die Anzeige 2 kann beispielsweise als vielfarbiges Organic-Light-Emitting-Display mit einer Vielzahl von Pixeln ausgebildet sein. Der Teilerwürfel 11 enthält eine physikalische Strahlenteilerfläche 12, die mit einer dielektrischen Schicht versehen ist.

Vom einem hier nicht dargestellten Objekt ausgehende Strahlen werden vom Objektiv 1 eingesammelt und als ein Bündel eingesammelter Objektstrahlen 13 in Richtung des Teilerwürfels 11 gegen eine Seite der physikalischen Strahlenteilerfläche 12 gerichtet. Eine Hälfte des Bündels eingesammelter Objektstrahlen 13 kann die Strahlenteilerfläche 12 als Teil des linksäugigen Bündels 5 Sehfeldstrahlen in Richtung des linksäugigen Okulars 3 passieren, während die andere Hälfte als Teil des rechtsäugigen Bündels 6 an der Strahlenteilerfläche 12 in Richtung des rechtsäugigen Okulars 4 reflektiert wird. Über das linksäugige und das rechtsäugige Okular 3 und 4 wird dieser Teil des linksäugigen bzw. rechtsäugigen Bündel 5 bzw. 6 Sehfeldstrahlen in das linke bzw. das rechte Auge eines in Figur 3 angedeuteten Benutzers der Vorrichtung projiziert. Damit kann der Benutzer das Objekt langandauernd betrachten.

Bei dieser Vorrichtung wird aber auch auf der Anzeige 2 ein Bild angezeigt, das hier spiegelverkehrt wiederzugeben ist. Ein dabei von der Anzeige 2 ausgesendetes Bündel Anzeigestrahlen 14 wird über eine Sammellinse eingesammelt und gemäss dieser Ausbildung der Erfindung gegen die andere Seite der Strahlenteilerfläche 12 gerichtet. Eine Hälfte des Bündels Anzeigestrahlen 14 kann als weiterer Teil des rechtsäugigen Bündels 6 Sehfeldstrahlen die Strahlenteilerfläche 12 in Richtung des rechtsäugigen Okulars 4 passieren, während die andere Hälfte als weiterer Teil des linksäugigen Bündels 5 an der Strahlenteilerfläche 12 in Richtung des linksäugigen Okulars 3 reflektiert wird. Der Benutzer dieser Vorrichtung kann somit vergrössernd das Objekt und dem Objekt überlagert die Anzeige 2 der Vorrichtung jeweils mit beiden Augen betrachten. Ein langandauerndes Betrachten des Objekts und/oder der Anzeige wird dadurch auf ergonomische Weise ermöglicht.

Durch Kombinieren der Aufteilung des Bündels Objektstrahlen 13 und des Bündels Anzeigestrahlen 14 jeweils in einen linksäugigen und rechtsäugigen Teil und der Überlagerung der linksäugigen bzw. der rechtsäugigen Teile zum linksäugigen und rechtsäugigen Bündel 5 und 6 Sehfeldstrahlen wird es möglich, ein Bündel Anzeigestrahlen 14 in den linksäugigen und in den rechtsäugigen Sichtkanal eines Direktsicht-Systems einzukoppeln, ohne dabei nennenswerte Teile des Bündels Objektstrahlen 13 und/oder des Bündels Anzeigestrahlen 14 zu verlieren. An einem idealen Strahlenteiler gäbe es beim Aufteilen und Überlagern gar keine Verluste.

Über einen bei dieser Vorrichtung nicht vorgesehenen, mechanischen oder elektrooptischen Verschluss im Direktsicht-Strahlengang bis zur physikalischen Strahlenteilerfläche oder einfach einem Objektivschutzdeckel wäre es möglich, das auf der Anzeige 2 wiedergegebene Bild ohne von Objektiv eingesammeltes Licht für sich allein zu betrachten.

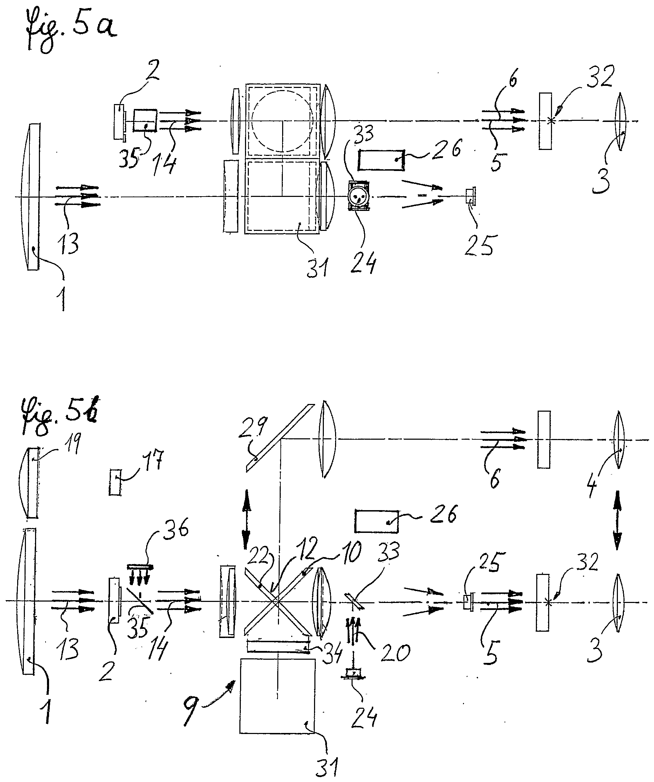

Soll hingegen während des Betrachtens des Objekts dem Benutzer als Bild eine graphische oder alphanumerische Information - beispielsweise eine Zielmarke, ein Symbol oder ein dem Objekt zuordenbarer Messwert - zur Verfügung gestellt werden, so kann dem Benutzer über die Anzeige 2 das Bild dieser Information dem Direktsicht-Bild überlagert werden. Sollte dabei das Direktsicht-Bilds eine zu grosse Hintergrundhelligkeit aufweisen, so kann bei einer erfindungsgemässen Vorrichtung - wie aus den Figuren 4 und 5b ersichtlich - ein gegebenenfalls variables Abschwächelement vorgesehen werden. Dieses Abschwächelement kann beispielsweise als LCD, Iris oder Abschwächfilter ausgebildet sein. Im Strahlengang zwischen dem Objektiv und der physikalischen Strahlenteilerfläche positioniert, kann über ein solches Abschwächelement das Bündel eingesammelter Objektstrahlen 13 ganz oder teilweise abgeschwächt werden.

Auch ist es mit Hilfe dieser Vorrichtung möglich, ein aufgenommenes Bild des Objekts über die Anzeige 2 wiederzugeben und einem Direktsicht-Bild desselben Objekts zu überlagern. Die gegenseitig zu überlagernden Strahlenbündeln brauchen hier - im Gegensatz zu manchen aus dem Stand der Technik bekannten Einspiegellösungen - nicht unbedingt kollimiert ausgerichtet zu sein. Es liegt auf der Hand, dass ein derartiges Überlagern eines rein optisch erzeugten Direktsicht-Bilds und eines elektrooptisch erzeugten Indirektsicht-Bilds neben einer dem Direktsicht-Bild korrespondierenden Aufnahme und Wiedergabe des Objekts auch eine präzise und lagestabile Anordnung und Ausrichtung derjenigen Bauteile der Vorrichtung erfordert, welche das Aufteilen und Überlagern bestimmen. Ist diese Präzision und Stabilität nicht gegeben, treten störende Doppelbilder auf. Das erfindungsgemässe, örtliche Zusammenführen einerseits des Aufteilens des Bündels Objektstrahlen 13 und des Bündels Anzeigestrahlen 14 jeweils in einen linksäugigen und rechtsäugigen Teil und andererseits das Überlagern der linksäugigen und rechtsäugigen Teile an ein und derselben Strahlenteilerfläche 12 erleichtert eine präzise und lagestabile Anordnung und Ausrichtung der das Aufteilen und Überlagern bestimmenden Bauteile ganz wesentlich.

Figur 4 zeigt in einer Schrägansicht die optischen und elektrooptischen Bauteile eines Ausführungsbeispiels einer Vorrichtung zum Betrachten eines fernen Objekts und einer Anzeige 2 der Vorrichtung. Die Vorrichtung ist Erfindungsgemäß in Form eines handhaltbaren, multifunktionalen Beobachtungsgeräts ausgebildet und umfasst sowohl die erste als auch die zweite Ausbildung der Erfindung. Das zu betrachtende ferne Objekt befindet sich typischerweise in einem Abstand von wenigen hundert bis mehreren tausend Metern.

Das multifunktionale Beobachtungsgerät dient bei Tag und bei Nacht einerseits zum lang andauernden Betrachten des fernen Objekts und andererseits zum Bestimmen dessen Relativposition zum Beobachtungsgerät. Über einen Distanzsensor und über einen Richtungssensor 26, die im Beobachtungsgerät integriert sind, erfolgt das Bestimmen der Distanz zum Objekt bzw. der azimutalen und zenitalen Ausrichtung einer Ziellinie 27 des Beobachtungsgeräts. Der Richtungssensor 26 ist hier als digitaler Magnetkompass ausgebildet. Über den digitalen Magnetkompass, der hier drei gerätefest angeordnete Magnetfeldsensoren zum dreidimensionalen Messen der Erdmagnetfeldes sowie zwei Neigungssensoren zum Messen der Richtung des Gravitationsfelds der Erde aufweist, kann die azimutale und zenitale Ausrichtung der Ziellinie 27 sowie die Verkippung des Beobachtungsgeräts um die Ziellinie 27 relativ zur Horizontalebene gemessen werden. Die Ziellinie 27 wird in diesem Ausführungsbeispiel über eine auf der Anzeige 2 angezeigte Zielmarke festgelegt und entspricht im Wesentlichen der optischen Achse des Objektivs 1. Die azimutale Ausrichtung könnte auch über einen Drehratensensor bestimmt werden.

Dieses Ausführungsbeispiels eines multifunktionalen Beobachtungsgeräts weist als optische Baugruppen neben dem Objektiv 1, dem Teilerwürfel 11 und den beiden Okularen 3 und 4 aus den vorherigen Ausführungsbeispielen, zwei als Porro erster Art ausgebildete, jeweils einem der Okulare 3 und 4 zugeordnete- Bildumkehrsysteme 8 und 9, einen wellenlängenselektiven Spiegel 22, ein weiteres Spiegelpaar, diverse Linsen, ein Bildsensorobjektiv 19 ein Senderobjektiv 23 und ein als Iris ausgebildetes Abschwächelement 34 auf. Als elektrooptische Baugruppen weist es neben der als farbiges Organic-Light-Emitting-Display ausgebildeten Anzeige 2, einen Bildsensor 17, einen Sender 24 und einen Empfänger 25 auf. Beide Bildumkehrsysteme 7 und 8 sind hier relativ zum Objektiv 1 und zur Anzeige 2 verschwenkbar.

Bei guten Sichtbedingungen kann das ferne Objekt vergleichbar den Ausführungsbeispielen aus Figur 1 und 2 auf rein optische Art und Weise beobachtet werden. Vergleichbar der Figur 3 werden hier an der physikalischen Strahlenteilerfläche 12 des Teilerwürfels 11 einerseits das vom Objektiv 1 eingesammelte Bündel Objektstrahlen 13 und andererseits das über eine Linse eingesammelte von der Anzeige 2 ausgehende Bündel Anzeigestrahlen 14 aufgeteilt sowie deren Teile entsprechend zu einem linksäugigen und rechtsäugigen Bündel 5 und 6 Sehfeldstrahlen überlagert. Im Gegensatz zur Vorrichtung aus Figur 3 werden hier Bündel kollimierter Strahlen aufgeteilt und überlagert.

Im Gegensatz zu den beiden ersten Ausführungsbeispielen werden hier das linksäugige Bildumkehrsystem 7 nur von linksäugigen Strahlenbündel 5 und das rechtsäugige Umkehrsystem 8 nur vom rechtsäugigen Strahlenbündel 6 genutzt. Sowohl das linksäugige als auch das rechtsäugige Bündel 5 und 6 Sehfeldstrahlen werden hier an jeweils sechs Reflexionsflächen gespiegelt. Die Anforderung in Bezug auf ein optisch möglichst identisches, linksäugiges und rechtsäugiges Bündel 5 und 6 Sehfeldstrahlen lässt sich durch dieselbe optische Weglänge des linksäugigen und des rechtsäugigen Bündels 5 und 6 leichter erfüllen. Nach erfolgter Bildumkehr wird über das linksäugige und das rechtsäugige Okular 3 und 4 das linksäugige Bündel 5 bzw. rechtsäugige Bündel 5 bzw. 6 Sehfeldstrahlen, die beide Objekt- und/oder Anzeigestrahlen umfassen, in das linke bzw. das rechte Auge eines Benutzers des multifunktionalen Beobachtungsgeräts projiziert.

Zum Bestimmen der Distanz zwischen dem fernen Objekt und dem Beobachtungsgerät wird vom Sender 24 hier über ein separates Sendeobjektiv 23 ein Bündel Sendestrahlen 20 auf das Objekt projiziert. Der Sender 24 weist beispielsweise eine Laserdiode mit einer Wellenlänge von eineinhalb Mikrometern auf. Am Objekt reflektierte Sendestrahlen werden hier über das Objektiv 1 wieder eingesammelt und über den Teilerwürfel 11 gegen den beispielsweise mit einer Avalanche-Diode aufweisenden Empfänger 25 gerichtet. Je nach Wellenlänge des Bündels Sendestrahlen 20 könnte es auch von Vorteil sein, dem Sender 24 und/oder dem Empfänger 25 alternativ das Bildsensorobjektiv 19 zuzuordnen.

Der zwischen dem Empfänger 25 und dem Teilerwürfel 11 angeordnete wellenlängenselektive Spiegel 22, weist hier eine dichroitischen Beschichtung auf. Die am Objekt reflektierten, vom Objektiv 1 eingesammelten Sendestrahlen 20 werden im Gegensatz zu den sichtbaren Strahlen des rechtsäugigen Bündels 6 am wellenlängenselektiven Spiegel 22 nicht reflektiert und können so zum Empfänger 25 gelangen. In an sich bekannter Weise kann dann die Distanz und über den Richtungssensor 26 die azimutale und zenitale Ausrichtung der Ziellinie 27 bestimmt werden.

Soll nun während des Betrachtens des fernen Objekts die vom Beobachtungsgerät bestimmte Relativposition dem Benutzer zur Verfügung gestellt werden, können die Werte auf der Anzeige 2 dargestellt werden. Auf dieselbe Weise könnten auch zu Messzwecken grafische Muster, beispielsweise ein Strichplattenbild, während dem Betrachten dem Benutzer zur Verfügung gestellt werden. Es wäre auch denkbar ein derartiges Strichplattenbild dem Benutzer über eine zusätzliche, gegebenenfalls spezifisch für diesen Zweck hergestellte, Anzeige zur Verfügung zu stellen.

Mit diesem als multifunktionales Beobachtungsgerät ausgebildeten Ausführungsbeispiel ist es - im Gegensatz zu den Ausführungsbeispielen aus Figur 1 und 2 - auch möglich ein fernes Objekt bei Nacht zu betrachten. Zu diesem Zweck wird über das Bildsensorobjektiv 19 ein Bündel weiterer Objektstrahlen 18 eingesammelt und auf dem Bildsensor 17 abgebildet. Das Bildsensorobjektiv 19 ist derart ausgebildet, dass auch Strahlen aus nahen infraroten Wellenlängenbereichen eingesammelt werden können.

Der Bildsensor 17 ist als Focal-Plane-Array ausgebildet und basiert beispielsweise auf einer Low-Noise-CMOS-Technologie, einer Electron-Bombardement-CMOS-Technologie, einer infrarot-photoelektrischen Technologie oder einer bolometrischen Technologie. Die Wahl der jeweiligen Technologie wird unter anderem durch den im Einsatz benötigten Wellenlängenbereich bestimmt. Bei Anwendungen in der Nacht und bei schlechten Sichtbedingungen könnten Bildsensoren für Strahlen aus nahen infraroten Wellenlängenbereichen insbesondere zwischen drei und fünf oder zwischen acht und zwölf Mikrometern eingesetzt werden. Je nach Einsatzzweck kann eine erfindungsgemässe Vorrichtung mit Anzeige auch als Gerätebasis für gleich mehrere unterschiedliche Bildsensoren für jeweils unterschiedliche Wellenlängenbereiche dienen.

Das in ein elektrisches Signal umgewandelte Bild wird hier spiegelsymmetrisch transformiert auf der Anzeige 2 wiedergegeben. Dem transformierten Bild zugeordnete, von der Anzeige 2 ausgehende Strahlen werden über eine Linse eingesammelt. Das Bündel Anzeigestrahlen 14 enthält somit ein auf elektrooptische Weise erzeugtes Indirektsicht-Bild des fernen Objekts. Dieses Indirektsicht-Bild wird ebenfalls über den Teilerwürfel 11, den wellenlängenselektiven Spiegel 22, das Spiegelpaar und die Okulare 3 und 4 in beide Augen des Benutzers projiziert. Weist das Direktsicht-Bild noch eine wahrnehmbare Lichtintensität auf, so wird es diesem überlagert wiedergegeben. Weist hingegen das Direktsicht-Bild eine wesentlich grössere Lichtintensität als das Indirektsicht-Bild der Anzeige 2 auf, so kann über das hier als Iris ausgebildete, variable Abschwächelement 34 die Lichtintensität des Direktsicht-Bilds entsprechend reduziert werden.

Auf demselben Weg kann ein virtuelles Bild, beispielsweise eine Landkarte und/oder bestimmte Symbole dem Direktsicht-Bild überlagert werden. Dabei müssen über den Richtungssensor 26 neben der Ausrichtung der Ziellinie 27 auch die Verkippung des multifunktionalen Beobachtungsgeräts um die Ziellinie 27 relativ zur Horizontalebene gemessen sowie das virtuelle Bild entsprechend ausgerichtet auf der Anzeige 2 dargestellt werden.

In das multifunktionale Beobachtungsgerät könnte zudem ein GPS-Empfänger integriert sein. Über einen in Figur 4 nicht dargestellten Stativanschluss könnte das multifunktionale Beobachtungsgerät für langandauernde Einsätze oder Beobachtungen weit entfernter Objekte auf einem Stativ, hier vorzugsweise aus amagnetischem Material, angebracht werden.

Figuren 5a und 5b zeigen in Seitenansicht bzw. in Draufsicht die optischen und elektrooptischen Bauteile eines alternativen Ausführungsbeispiels der Vorrichtung aus Figur 4, welche Vorrichtung auch hier als handhaltbares, multifunktionales Beobachtungsgerät mit Distanzsensor und Richtungssensor 26 ausgebildet ist und beide Ausbildungen der Erfindung umfasst.

Die Indirektsicht-Optik weist das Bildsensorobjektiv 19, den Bildsensor 17 und die Anzeige 2 des Ausführungsbeispiels aus Figur 4 auf. Im Gegensatz dazu ist hier jedoch das Bild auf der Anzeige 2 nicht spiegelverkehrt darzustellen, da das Bündel Anzeigestrahlen 14 aufrecht über die Okulare 3 und 4 abgebildet wird.

Die Direktsicht-Optik dieses Ausführungsbeispiels baut auf der Optik des Ausführungsbeispiels aus Figur 1 auf. Im Gegensatz zum zentralen Bildumkehrsystem 28 aus Figur 1 ist hier jedoch ein gemeinsames Bildumkehrsystem 9 vorgesehen, das neben dem wellenlängenselektiven Spiegel 22 aus Figur 4, der Strahlenteilerplatte 10 und der Spiegelplatte 29 aus Figur 1 ein Eckprisma 31 aufweist. Zudem sind hier zwei in der Bildebene des Objektivs 1 angeordnete Glasplatten vorgesehen. Auf der dem linksäugigen Okular 3 zugeordneten Glasplatte ist hier ein Strichplattenmuster 32 appliziert. Zusätzlich zu dem applizierten Strichplattenmuster 32 ist hier eine in Form einer Strichplatte ausgebildete Anzeigenfigur vorgesehen. Die im Wesentlichen monochromatisch leuchtende Anzeigenfigur wird hier auf einer spezifisch für diesen Zweck hergestellten Anzeige 36 über einen schmalbandigen, wellenlängenselektiven Filter 35 der physikalischen Strahlenteilerfläche 12 in den Strahlengang der Anzeige 2 vor eingespiegelt. Es wäre aber auch denkbar die Anzeigenfigur hier über eine Reflexionsfläche des Eckprismas 31 einzukoppeln.

Das Bündel eingesammelter Objektstrahlen 13 wird vom wellenlängenselektiven Spiegel 22 in Richtung des Eckprismas 31 reflektiert. Durch zwei weitere Totalreflexionen an den zwei Reflexionsflächen des Eckprismas 31 wird das Bündel eingesammelter Objektstrahlen 13 gegen die Strahlenteilerplatte 10 mit der physikalischen Strahlenteilerfläche 12 gerichtet. An dieser wird das Bündel eingesammelter Objektstrahlen 13 in ein linksäugiges Bündel 5 und in ein rechtsäugiges Bündel 6 Sehfeldstrahlen aufgeteilt. Das gemeinsame Bildumkehrsystem umfasst hier drei gemeinsame Reflexionsflächen und jeweils eine separate Reflexionsfläche für das linksäugige und das rechtsäugige Bündel 5 und 6 Sehfeldstrahlen. Die separate Reflexionsfläche für das linksäugige Bündel 5 ist zugleich auch als optisches Bauteil mit der physikalischen Strahlenteilerfläche 12 gemäss der Erfindung ausgebildet. Das rechtsäugige Bündel 6 kann sich durch die physikalischen Strahlenteilerfläche 12 hindurch gegen die Spiegelplatte 29 ausbreiten und wird von dieser in Richtung des rechtsäugigen Okulars 4 gelenkt.

Der Distanzsensor weist im Vergleich zum Ausführungsbeispiel aus Figur 4 hier einen höheren Integrationsgrad in die Direktsicht-Optik auf. Das Bündel Sendestrahlen 20 wird hier vom Sender 24 über einen kleinen Einkoppelspiegel 33 durch den wellenlängenselektiven Spiegel 22 und das Objektiv 1 hindurch auf das ferne Objekt projiziert. Am Objekt reflektierte Sendestrahlen 21 werden über dasselbe Objektiv 1 wieder eingesammelt und durch denselben wellenlängenselektiven Spiegel 22 hindurch am kleinen Einkoppelspiegel 33 vorbei auf dem Empfänger 25 abgebildet. Ein kleiner, zentraler Teil der am Objekt reflektierten Sendestrahlen 21 kann den kleinen Einkoppelspiegel 33 nicht passieren, der hier im Strahlengang des Distanzsensors als geometrischer Strahlenteiler wirkt.

Selbstverständlich kann bei einer Vorrichtung gemäss der Erfindung über eine zusätzliche Linsengruppe, bevorzugt im Objektivsystem, eine variable Vergrösserung der Direktsicht-Optik bereitgestellt werden. Es wäre aber auch denkbar - wie aus dem Stand der Technik bekannt - jeweils eine zusätzliche Linsengruppe den beiden Okulare vorzusehen, wodurch auch die Anzeige 2 mit variabler Vergrösserung betrachtet werden könnte.

## Patentansprüche

1. Handhaltbares, multifunktionales Beobachtungsgerät zum vergrössernden Betrachten eines fernen Objekts, von dem Objektstrahlen ausgehen, mit
- einer Direktsicht-Optik mit einem einzigen Objektiv (1) zum Einsammeln und Kollimieren von Objektstrahlen,
- wenigstens einem Bildumkehrsystem (7, 8, 9, 28), das mehrere Reflexionsflächen für eingesammelte Objektstrahlen aufweist,
- einem linksäugigen Okular (3) und einem rechtsäugigen Okular (4) zum Projizieren eines linksäugigen Bündels Sehfeldstrahlen (5) bzw. eines rechtsäugigen Bündels (6) Sehfeldstrahlen, wobei die beiden Okulare (3, 4) gegeneinander linear verschiebbar sind,
- einer Anzeige (2), von der Anzeigestrahlen ausgehen,
- einem Distanzmesser mit einer Ziellinie (27), mit welchem Sendestrahlen (20) gegen das ferne Objekt aussendbar sind, und wobei vom Objektiv (1) eingesammelte, am fernen Objekt reflektierte Sendestrahlen (21) über eine wellenlängenselektive Reflexionsfläche (22) hin zu einem Empfänger (25) auskoppelbar sind, und
- Richtungssensoren (26) zum Bestimmen einer azimutalen und gegebenenfalls zenitalen Ausrichtung der Ziellinie (27),
wobei ein optisches Bauteil (7, 8, 9, 10, 11) mit einer physikalischen Strahlenteilerfläche (12) derart ausgebildet und angeordnet ist, dass an der Strahlenteilerfläche (12) einerseits ein Bündel eingesammelter kollimierter Objektstrahlen (13) und ein Bündel kollimierter Anzeigestrahlen (14) einander überlagerbar und andererseits in das linksäugige (5) und das rechtsäugige Bündel kollimierter Sehfeldstrahlen (6) aufteilbar sind.

2. Handhaltbares Beobachtungsgerät nach Anspruch 1, bei dem ein linksäugiges Bildumkehrsystem (7) und ein rechtsäugiges Bildumkehrsystem (8) vorgesehen sind.

3. Handhaltbares Beobachtungsgerät nach Anspruch 1, bei dem das optische Bauteil als das wenigstens eine Bildumkehrsystem (7, 8, 9) und eine der mehreren Reflexionsflächen als physikalische Strahlenteilerfläche (12) ausgebildet ist.

4. Handhaltbares Beobachtungsgerät nach Anspruch 1 oder 2, bei dem das optische Bauteil als Planplatte (10) oder Teilerwürfel (11) ausgebildet ist.

5. Handhaltbares Beobachtungsgerät nach einem der vorhergehenden Ansprüche, bei dem nur eines der beiden Okulare (3, 4) relativ zum Objektiv (1) bewegbar ist.

6. Handhaltbares Beobachtungsgerät nach einem der vorhergehenden Ansprüche, bei dem ein, gegebenenfalls variables, Abschwächelement (34) zwischen dem Objektiv (1) und der physikalischen Strahlenteilerfläche (12) vorgesehen ist.

7. Handhaltbares Beobachtungsgerät nach einem der vorhergehenden Ansprüche, bei dem wenigstens ein Bildsensor (17) zum Umwandeln eines Bündels weiterer eingesammelter Objektstrahlen (18) in ein Signal vorgesehen ist, wobei zum elektrooptischen Beobachten des fernen Objekts dem Signal das Bündel kollimierter Anzeigestrahlen (14) zuordenbar ist.

8. Handhaltbares Beobachtungsgerät nach Anspruch 7, bei dem eine Indirektsicht-Optik mit einem dem Bildsensor (17) zugeordneten Bildsensorobjektiv (19) zum Einsammeln des Bündels weiterer eingesammelter Objektstrahlen (18) vorgesehen ist, das vorzugsweise infrarote Wellenlängenbereiche, beispielsweise von zwei bis fünf Mikrometern und/oder acht bis zwölf Mikrometern, umfasst.

9. Handhaltbares Beobachtungsgerät nach einem der vorhergehenden Ansprüche, bei dem die Sendestrahlen (20) über das Objektiv (1), gegebenenfalls über einen Einkoppelspiegel (33) koaxial eingekoppelt, auf das ferne Objekt projizierbar sind.

10. Handhaltbares Beobachtungsgerät nach einem der vorhergehenden Ansprüche, bei dem die Richtungssensoren (26) neben einem Neigungssensor einen Magnetfeldsensor oder einen Drehratensensor umfassen.

11. Handhaltbares Beobachtungsgerät nach einem der vorhergehenden Ansprüche, bei dem weitere Richtungssensoren (26) zum Bestimmen einer Verkippung der Okulare (3, 4) um die Ziellinie (27) vorgesehen sind.

12. Handhaltbares Beobachtungsgerät nach einem der vorhergehenden Ansprüche, bei dem eine Datenschnittstelle vorgesehen ist, über welche der Distanzmesser, die Richtungssensoren (26) und ggf. der wenigstens eine Bildsensor (17) ansteuerbar und/oder deren bereitgestellte Information auslesbar ist.

## Claims

1. A hand-held, multi-functional sighting device for the magnified viewing of a distant object from which object rays emanate, comprising
- a direct vision optics with a single objective (1) for collecting and collimating object rays,
- at least one image inversion system (7, 8, 9, 28) which has a plurality of reflective surfaces for collected object rays, and
- a left eyepiece (3) and a right eyepiece (4) for projecting a left-eye beam of visual field rays (5) and a right-eye beam (6) of visual field rays, respectively, in which the two eyepieces (3, 4) are linearly displaceable relative to one another,
- a display (2) from which display rays emanate,
- a distance sensor having a line of sight (27) with which rays (20) towards the distant object are emittable, and wherein rays (21) collected by the objective (1) and reflected by the distant object being capable of being output to the distance sensor via a wavelength-selective reflective surface (22),
- direction sensors (26) for determining the azimuthal and optionally zenithal orientation of the line of sight (27),
wherein
an optical component (7, 8, 9, 10, 11) having a physical beam splitter surface (12) is designed and arranged in such a way that at the physical beam splitter surface (12) firstly a beam of collected collimated object rays (13) and a beam of collimated display rays being capable of being superimposed one on the other and secondly being capable of being split into the left-eye (5) and the right-eye beam of visual field rays (6).

2. The hand-held device as claimed in claim 1, in which a left-eye image inversion system (7) and a right-eye image inversion system (8) are provided.

3. The hand-held device as claimed in claim 1, in which the optical component is in the form of an image inversion system (7, 8, 9) and one of the plurality of reflective surfaces is in the form of physical beam splitter surface (12).

4. The hand-held device as claimed in claim 1 or 2, in which the optical component is in the form of a parallel plate (10) or splitter cube (11).

5. The hand-held device as claimed in any one of the preceding claims, in which only one of the two eyepieces (3, 4) is movable relative to the objective (1).

6. The hand-held device as claimed in any one of the preceding claims, in which an attenuation element (34), optionally a variable one, is provided between the objective (1) and the physical beam splitter surface (12).

7. The hand-held device as claimed in any one of the preceding claims, in which at least one image sensor (17) for converting a beam of further collected object rays (18) into a signal is provided, it being possible to coordinate the beam of collimated display rays (14) with the signal for the electrooptical observation of the distant object.

8. The hand-held device as claimed in claim 7, in which an indirect vision optics with an image sensor objective (19) affiliated to the image sensor for collecting the beam of further collected object rays (18) is provided, which preferably comprises infrared wavelength ranges, for example from two to five microns and/or eight to twelve microns.

9. The hand-held device as claimed in any one of the preceding claims, in which the transmitted rays (20) can be projected onto the distant object via the objective (1), optionally input coaxially via an input mirror (33).

10. The hand-held device as claimed in any one of the preceding claims, in which the direction sensors (26) comprise a magnetic field sensor or a rotation rate sensor in addition to a tilt sensor.

11. The hand-held device as claimed in any one of the preceding claims, in which further direction sensors (26) for determining a tilt of the eyepieces (3, 4) about the line of sight (27) are provided.

12. The hand-held device as claimed in any one of the preceding claims, in which a data interface is provided, via which the distance sensor, the direction sensors (26) and/or the at least one image sensor (17) can be actuated and/or information provided by them can be read out.

## Revendications

1. Appareil d'observation portable multifonctionnel pour l'observation grossissante d'un objet distant d'où proviennent des rayons d'objet, comportant
- une optique de vision directe dotée d'un objectif (1) unique destiné à la collecte et à la collimation de rayons d'objet,
- au moins un système d'inversion d'image (7, 8, 9, 28) présentant plusieurs surfaces de réflexion pour les rayons d'objet collectés,
- un oculaire pour œil gauche (3) et un oculaire pour œil droit (4) destinés à projeter respectivement un faisceau de rayons de champ de vision pour œil gauche (5) et un faisceau de rayons de champ de vision pour œil droit (6), les deux oculaires (3, 4) pouvant être déplacés linéairement l'un par rapport à l'autre,
- un affichage (2), d'où proviennent des rayons d'affichage,
- un télémètre doté d'une ligne de visée (27), avec lequel il est possible d'émettre des rayons émis (20) vers l'objet distant, lesdits rayons émis (21) réfléchis par l'objet distant et collectés par l'objectif (1) pouvant être découplés vers un récepteur (25) par une surface de réflexion (22) sélective en longueur d'onde, et
- des capteurs directionnels (26) destinés à déterminer une direction azimutale et éventuellement une direction zénithale de la ligne de visée (27),
dans lequel
un composant optique (7, 8, 9, 10, 11) doté d'une surface physique séparatrice de faisceau (12) est conçu et disposé de manière qu'un faisceau de rayons d'objet collectés (13) collimatés et un faisceau de rayons d'affichage (14) collimatés peuvent, d'une part, être superposés l'un à l'autre au niveau de la surface séparatrice de faisceau (12) et, d'autre part, être séparés en lesdits faisceaux de rayons de champ de vision collimatés pour œil gauche (5) et pour œil droit (6).

2. Appareil d'observation portable selon la revendication 1, dans lequel sont prévus un système d'inversion d'image pour œil gauche (7) et un système d'inversion d'image pour œil droit (8).

3. Appareil d'observation portable selon la revendication 1, dans lequel le composant optique est conçu sous la forme de l'au moins un système d'inversion d'image (7, 8, 9) et l'une des plusieurs surfaces de réflexion est conçue sous la forme de ladite surface physique séparatrice de faisceau (12).

4. Appareil d'observation portable selon la revendication 1 ou 2, dans lequel le composant optique est conçu sous la forme d'une plaque plane (10) ou d'un cube séparateur (11).

5. Appareil d'observation portable selon l'une des revendications précédentes, dans lequel un seul des deux oculaires (3, 4) peut être déplacé par rapport à l'objectif (1).

6. Appareil d'observation portable selon l'une des revendications précédentes, dans lequel un élément d'atténuation (34), éventuellement variable, est prévu entre l'objectif (1) et la surface physique séparatrice de faisceau (12).

7. Appareil d'observation portable selon l'une des revendications précédentes, dans lequel au moins un capteur d'image (17) est prévu pour transformer un faisceau d'autres rayons d'objet collectés (18) en un signal, et dans lequel il est possible d'associer audit signal le faisceau de rayons d'affichage (14) collimatés pour l'observation électro-optique de l'objet distant.

8. Appareil d'observation portable selon la revendication 7, dans lequel une optique à vision indirecte dotée d'un objectif de capteur d'image (19), associé au capteur d'image (17), est prévue pour collecter le faisceau d'autres rayons d'objet collectés (18) qui contient de préférence des domaines de longueur d'onde infrarouge allant par exemple de 2 à 5 micromètres et/ou de 8 à 12 micromètres.

9. Appareil d'observation portable selon l'une des revendications précédentes, dans lequel les rayons émis (20) peuvent être projetés sur l'objet distant au moyen de l'objectif (1), et éventuellement couplés de manière coaxiale au moyen d'un miroir de couplage (33).

10. Appareil d'observation portable selon l'une des revendications précédentes, dans lequel les capteurs directionnels (26) comprennent un magnétomètre ou un gyromètre en plus d'un inclinomètre.

11. Appareil d'observation portable selon l'une des revendications précédentes, dans lequel d'autres capteurs directionnels (26) sont prévus pour déterminer un basculement des oculaires (3, 4) autour de la ligne de visée (27).

12. Appareil d'observation portable selon l'une des revendications précédentes, dans lequel il est prévu une interface de données au moyen de laquelle il est possible de commander le télémètre, les capteurs directionnels (26) et éventuellement l'au moins un capteur d'image (17), et/ou de lire les informations qu'ils fournissent.
